# EUROPÄISCHE PATENTSCHRIFT

(11) **EP 1 372 351 B1**
(45) Veröffentlichungstag und Bekanntmachung des Hinweises auf die Patenterteilung: **22.06.2005**
(21) Anmeldenummer: 03090123.5
(22) Anmeldetag: 24.04.2003
(51) Int. Cl.: H04Q 7/38

(54) **Verfahren zum Einrichten eines Zusatzdienstes in einem Mobilfunknetz**
Method for setting up an additional service in a radio mobile network
Procédé pour installer un service supplémentaire dans un réseau radio mobile

(30) Priorität: 10.06.2002 DE 10226316
(43) Veröffentlichungstag der Anmeldung: 17.12.2003
(73) Patentinhaber: SIEMENS AKTIENGESELLSCHAFT, 80333 München (DE)
(72) Erfinder: Berg, Andreas, Dr., 13591 Berlin (DE); Gabrysch, Mathias, Dr., 80469 München (DE); Klatt, Uwe, 0451 Oslo (NO); Wölkner, Christian, 36404 Oechsen (DE)

(56) Entgegenhaltungen:
- EP-A- 1 122 967
- DE-A- 19 717 588
- US-A- 5 815 810
- US-A- 5 850 603
- US-B1- 6 341 221

## Beschreibung

Die Erfindung betrifft ein Verfahren zum Einrichten eines Zusatzdienstes in einem Mobilfunknetz.

In Mobilfunknetzen nach dem GSM-Standard (GSM = Global System for Mobile Communication) werden für die Mobilfunkteilnehmer in einem Heimatregister (HLR = Home Location Register) Daten gespeichert. Diese Daten geben u.a. darüber Auskunft, welche Netzwerkdienste die Teilnehmer benutzen. Ein Teil dieser Daten legt fest, unter welchen Umständen z. B. Dienste eines intelligenten Netzes (IN = Intelligent Network) mit Unterstützung von CAMEL-Protokollen (CAMEL = Customized Applications for Mobile network Enhanced Logic) gestartet werden. Dieser Teil der Daten - im folgenden Dienstdaten genannt - wird auch als "CAMEL Subscription Information" (CSI) bezeichnet.

Zur Einrichtung von derartigen Diensten ist es denkbar, dass bei einem Diensteinrichtungswunsch in dem Mobilfunknetz ein die notwendigen Diensteinrichtungsdaten enthaltender Datensatz (ein sog. Ticket) erzeugt wird, dass ein solcher Datensatz dann offline ausgewertet und die Daten manuell in das Heimatregister eingetragen werden. Dieses Verfahren ist zeit- und administrationsaufwendig und daher auch sehr teuer.

In Dokument EP 1 122 967 werden vom besuchten Netz die Alt-Dienstdaten abgefragt und anhand dessen entschieden, ob neue Zusatz-Dienste eingefährt werden sollen.

Der Erfindung liegt die Aufgabe zugrunde, ein Verfahren anzugeben, mit dem auf eine einfache, kostengünstige und zuverlässige Art und Weise Dienste in Mobilfunknetzen eingerichtet werden können.

Diese Aufgabe wird erfindungsgemäß gelöst durch ein Verfahren zum Einrichten eines Zusatz-Dienstes in einem Mobilfunknetz_{,} bei dem von einem Administrationsrechner mittels einer Abfragenachricht aus einem Heimatregister des Mobilfunknetzes Alt-Dienstdaten bereits eingerichteter Alt-Dienste abgefragt werden, anhand der abgefragten Alt-Dienstdaten ermittelt wird, ob den Zusatz-Dienst betreffende Zusatz-Dienstdaten zusätzlich zu den Alt-Dienstdaten in dem Heimatregister speicherbar sind, bei bestehender Speichermöglichkeit von dem Administrationsrechner mittels einer Einschreibnachricht das Speichern der Zusatz-Dienstdaten in dem Heimatregister veranlasst und damit der Zusatz-Dienst eingerichtet wird, oder bei nicht bestehender Speichermöglichkeit das Einrichten des Zusatz-Dienstes abgebrochen wird. Dabei ist insbesondere vorteilhaft, dass von dem Administrationsrechner in einer automatisierten Art und Weise Zusatzdienste durch Einschreiben von Zusatzdienstdaten in dem Heimatregister eingerichtet werden können. Ebenso werden vorteilhafterweise bereits eingerichtete Dienste (die im Rahmen dieser Anmeldung Alt-Dienste genannten werden) berücksichtigt; anhand von abgefragten Daten über diese Alt-Dienste kann ermittelt werden, ob zusätzlich neben den Alt-Diensten ein neuer Zusatzdienst eingerichtet werden kann.

Die einzurichtenden Zusatzdienste können prinzipiell in zwei Kategorien unterteilt werden: In Empfänger-Dienste (MT-Services = Mobile Terminated Services) und in Absender-Dienste (MO-Services = Mobile Originated Services). Empfänger-Dienste sind solche, die bei Eintreffen eines Rufes bei einem Zielteilnehmer gestartet werden; Absender-Dienste hingegen werden gestartet, wenn ein Ruf von einem rufenden Teilnehmer aus abgesendet wird.

Das erfindungsgemäße Verfahren kann so ausgestaltet sein, dass zum Einrichten eines Empfänger-Dienstes, der bei Eintreffen eines Ziel-Rufes bei einem Zielteilnehmer gestartet wird, anhand der abgefragten Alt-Dienstdaten festgestellt wird, ob ein Alt-Empfänger-Dienst ersten Typs eingerichtet ist, der mittels eines Triggerpunktes einer Gateway-Mobilvermittlungsstelle des Mobilfunknetzes gestartet wird, wenn an dieser Gateway-Mobilvermittlungsstelle eine Rufaufbauforderung für einen Ruf zu dem Zielteilnehmer eintrifft, ob ein Alt-Empfänger-Dienst zweiten Typs eingerichtet ist, der mittels eines Triggerpunktes einer Besucher-Mobilvermittlungsstelle des Mobilfunknetzes gestartet wird, wenn an dieser Besucher-Mobilvermittlungsstelle eine Rufaufbauforderung für einen Ruf zu dem Zielteilnehmer eintrifft, und dass nur dann erkannt wird, dass die Dienstdaten des Empfänger-Dienstes in dem Heimatregister speicherbar sind, wenn nicht gleichzeitig der Alt-Empfänger-Dienst ersten Typs und der Alt-Empfänger-Dienst zweiten Typs eingerichtet ist. Bei dieser Ausgestaltung des erfindungsgemäßen Verfahrens kann vorteilhafterweise durch Auswertung der Typen der bereits eingerichteten Alt-Empfänger-Dienste festgestellt werden, ob ein weiterer Empfänger-Dienst in dem Mobilfunknetz mittels Speicherung der Dienstdaten dieses Empfänger-Dienstes in dem Heimatregister einrichtbar ist.

Als ein Empfänger-Dienst ersten Typs wird also im Rahmen dieser Anmeldung ein solcher Empfänger-Dienst verstanden, der mittels eines Triggers in einer Gateway-Mobilvermittlungsstelle des Mobilfunknetzes gestartet wird, wenn an dieser Vermittlungsstelle eine Rufaufbauforderung für einen Ruf zu dem Zielteilnehmer eintrifft. Unter Empfänger-Dienst zweiten Typs dagegen wird ein Dienst verstanden, der mittels eines Triggers einer Besucher-Mobilvermittlungsstelle des Mobilfunknetzes gestartet wird, wenn an dieser Besucher-Mobilvermittlungsstelle eine Rufaufbauforderung für einen Ruf zu dem Zielteilnehmer eintrifft.

Wenn weder der Alt-Empfänger-Dienst ersten Typs noch der Alt-Empfänger-Dienst zweiten Typs eingerichtet ist, dann wird der Empfänger-Dienst als ein neuer Empfänger-Dienst ersten Typs eingerichtet. Das erfindungsgemäße Verfahren kann in diesem Fall so ausgestaltet sein, dass den Dienstdaten des neuen Empfänger-Dienstes ersten Typs ein "Terminating CAMEL Subscription Information" (T-CSI) genanntes Kennzeichen zugeordnet wird. Durch dieses Kennzeichen wird der neue Empfänger-Dienst als ein Dienst ersten Typs charakterisiert, so dass nun der Startzeitpunkt dieses neuen Empfänger-Dienstes festgelegt ist.

Das erfindungsgemäße Verfahren kann so ablaufen, dass, wenn lediglich der Alt-Empfänger-Dienst ersten Typs eingerichtet ist, und der Empfänger-Dienst zeitlich nach dem Alt-Empfänger-Dienst ersten Typs gestartet werden soll, der Empfänger-Dienst als ein neuer Empfänger-Dienst zweiten Typs eingerichtet wird. In diesem Fall wird den Dienstdaten des neuen Empfänger-Dienstes zweiten Typs ein "VMSC Terminating CAMEL Subscription Information" (VT-CSI) genanntes Kennzeichen zugeordnet. Bei dieser Ausführungsform des Verfahrens wird der neue Empfänger-Dienst mittels des Kennzeichens VT-CSI als ein Dienst zweiten Typs gekennzeichnet und damit der Startzeitpunkt dieses neuen Empfänger-Dienstes festgelegt.

Das erfindungsgemäße Verfahren kann so ablaufen, dass wenn lediglich der Alt-Empfänger-Dienst ersten Typs eingerichtet ist, und der Empfänger-Dienst zeitlich vor dem Alt-Empfänger-Dienst ersten Typs gestartet werden soll, der Alt-Empfänger-Dienst ersten Typs gelöscht und als ein neuer Alt-Empfänger-Dienst zweiten Typs eingerichtet wird, und der Empfänger-Dienst als ein neuer Empfänger-Dienst ersten Typs eingerichtet wird. Dabei kann den Dienstdaten des neuen Alt-Empfänger-Dienstes zweiten Typs ein "VMSC Terminating CAMEL Subscription Information" (VT-CSI) genanntes Kennzeichen zugeordnet werden, und den Dienstdaten des neuen Empfänger-Dienstes ersten Typs ein "Terminating CAMEL Subscription Information" (T-CSI) genanntes Kennzeichen zugeordnet werden. Bei dieser Ausführungsform des erfindungsgemäßen Verfahrens kann vorteilhafterweise durch Veränderung der Dienstdaten des Alt-Empfänger-Dienstes neben der gezielten Erzeugung der Dienstdaten des neuen Empfängerdienstes erreicht werden, dass der neue Empfängerdienst zeitlich vor dem Alt-Empfänger-Dienst gestartet wird.

Das erfindungsgemäße Verfahren kann auch derart ausgestaltet sein, dass, wenn lediglich der Alt-Empfänger-Dienst zweiten Typs eingerichtet ist, und der Empfänger-Dienst zeitlich nach dem Alt-Empfänger-Dienst zweiten Typs gestartet werden soll, der Alt-Empfänger-Dienst zweiten Typs gelöscht und als ein neuer Alt-Empfänger-Dienst ersten Typs eingerichtet wird, und der Empfänger-Dienst als ein neuer Empfänger-Dienst zweiten Typs eingerichtet wird. Dabei kann den Dienstdaten des neuen Alt-Empfänger-Dienstes ersten Typs ein "Terminating CAMEL Subscription Information" (T-CSI) genanntes Kennzeichen zugeordnet werden, und den Dienstdaten des neuen Empfänger-Dienstes zweiten Typs ein "VMSC Terminating CAMEL Subscription Information" (VT-CSI) genanntes Kennzeichen zugeordnet werden. Dadurch kann vorteilhafterweise erreicht werden, dass der neue Empfänger-Dienst zeitlich nach dem bereits eingerichteten Alt-Empfänger-Dienst gestartet wird.

Schließlich kann das Verfahren auch so ausgestaltet sein, dass, wenn lediglich der Alt-Empfänger-Dienst zweiten Typs eingerichtet ist, und der Empfänger-Dienst zeitlich vor dem Alt-Empfänger-Dienst zweiten Typs gestartet werden soll, der Empfänger-Dienst als ein neuer Empfänger-Dienst ersten Typs eingerichtet wird. Dabei kann den Dienstdaten des neuen Empfänger-Dienstes ersten Typs ein "Terminating CAMEL Subscription Information" (T-CSI) genanntes Kennzeichen zugeordnet werden.

Die zuletzt genannten Ausführungsformen des erfindungsgemäßen Verfahrens betreffen die Einrichtung von Empfänger-Diensten; in den nun folgenden Ausführungsformen wird die Einrichtung von Absender-Diensten beschrieben. Zum Einrichten eines Absender-Dienstes, der beim Absenden eines Rufes von einem Teilnehmer gestartet wird, wird anhand der abgefragten Alt-Dienstdaten festgestellt, ob ein Alt-Absender-Dienst dritten Typs eingerichtet ist, der mittels eines Triggerpunktes einer Mobilvermittlungsstelle des Mobilfunknetzes gestartet wird, wenn an dieser Mobilvermittlungsstelle eine Rufaufbauforderung für einen beliebigen, von dem Teilnehmer ausgehenden, Ruf eintrifft, ob bereits eine maximal mögliche Anzahl Alt-Absender-Dienste vierten Typs eingerichtet sind, welche mittels Triggerpunkte einer Mobilvermittlungsstelle des Mobilfunknetzes gestartet werden, wenn an dieser Mobilvermittlungsstelle Rufaufbauforderungen für von dem Teilnehmer ausgehende Rufe zu vorgewählten Zielrufnummern eintreffen, und dass nur dann erkannt wird, dass die Dienstdaten des Empfänger-Dienstes in dem Heimatregister speicherbar sind, wenn nicht gleichzeitig der Alt-Absender-Dienst dritten Typs und die maximal mögliche Anzahl Alt-Absender-Dienste vierten Typs eingerichtet sind. Dabei kann vorteilhafterweise durch Bestimmen des Typs der bereits eingerichteten Alt-Absender-Dienste festgestellt werden, ob die Einrichtung des neuen Absender-Dienstes realisierbar ist.

Im Rahmen dieser Anmeldung sollen also unter Absender-Diensten dritten Typs solche Absender-Dienste verstanden werden, die mittels eines Triggers einer Mobilvermittlungsstelle des Telekommunikationsnetzes gestartet werden, wenn an dieser Mobilvermittlungsstelle eine Rufaufbauforderung für einen beliebigen, von dem Teilnehmer ausgehenden Ruf eintrifft. Als Absender-Dienste vierten Typs sollen solche Absenderdienste verstanden werden, welche mittels eines Triggers einer Mobilvermittlungsstelle des Mobilfunknetzes gestartet werden, wenn an dieser Mobilvermittlungsstelle Rufbaubauforderungen für von dem Teilnehmer ausgehende Rufe zuvor gewählten Zielrufnummern eintreffen.

Das erfindungsgemäße Verfahren kann so ausgeführt werden, dass, wenn weder der Alt-Absender-Dienst dritten Typs noch die maximal mögliche Anzahl Alt-Absender-Dienste vierten Typs eingerichtet sind, der Absender-Dienst als ein neuer Absender-Dienst dritten Typs eingerichtet wird. In diesem Fall wird den Dienstdaten des neuen Absender-Dienstes dritten Typs ein "Originating CAMEL Subscription Information" (O-CSI) genanntes Kennzeichen zugeordnet.

Das erfindungsgemäße Verfahren kann auch so gestaltet sein, dass, wenn lediglich der Alt-Absender-Dienst dritten Typs eingerichtet ist, und der Absender-Dienst zeitlich nach dem Alt-Absender-Dienst dritten Typs gestartet werden soll, der Absender-Dienst als ein neuer Absender-Dienst vierten Typs eingerichtet wird. Dabei kann den Dienstdaten des neuen Absender-Dienstes vierten Typs ein "Dialled Service CAMEL Subscription Information" (D-CSI) genanntes Kennzeichen zugeordnet werden.

Das erfindungsgemäße Verfahren kann auch so ablaufen, dass wenn lediglich der Alt-Absender-Dienst dritten Typs eingerichtet ist, und der Absender-Dienst zeitlich vor dem Alt-Absender-Dienst dritten Typs gestartet werden soll, der Alt-Absender-Dienst dritten Typs gelöscht und als ein neuer Absender-Dienst vierten Typs eingerichtet wird, und der Absender-Dienst als ein neuer Absender-Dienst dritten Typs eingerichtet wird. Daraufhin kann den Dienstdaten des neuen Absender-Dienstes vierten Typs ein "Dialled Service CAMEL Subscription Information" (D-CSI) genanntes Kennzeichen zugeordnet werden, und den Dienstdaten des neuen Absender-Dienstes dritten Typs ein "Originating CAMEL Subscription Information" (O-CSI) genanntes Kennzeichen zugeordnet werden.

Das erfindungsgemäße Verfahren kann auch so ausgeführt werden, dass wenn eine geringere Anzahl als die maximal mögliche Anzahl Alt-Absender-Dienste vierten Typs eingerichtet sind, und der Absender-Dienst zeitlich nach den eingerichteten Alt-Absender-Diensten vierten Typs gestartet werden soll, der Absender-Dienst als ein weiterer Absender-Dienst vierten Typs eingerichtet wird, wobei für diesen weiteren Absender-Dienst vierten Typs als vorgewählte Zielrufnummer ein Platzhalter (Joker) vorgewählt wird. In diesem Fall kann den Dienstdaten des weiteren Absender-Dienstes vierten Typs ein "Dialled Service CAMEL Subscription Information" (D-CSI) genanntes Kennzeichen zugeordnet werden.

Das erfindungsgemäße Verfahren kann auch so ausgestaltet sein, dass, wenn lediglich Alt-Absender-Dienste vierten Typs eingerichtet sind, und der Absender-Dienst zeitlich vor den Alt-Absender-Diensten vierten Typs gestartet werden soll, der Absender-Dienst als ein neuer Absender-Dienst dritten Typs eingerichtet wird. In diesem Falle kann den Dienstdaten des neuen Absender-Dienstes dritten Typs ein "Originating CAMEL Subscription Information" (O-CSI) genanntes Kennzeichen zugeordnet werden.

Das erfindungsgemäße Verfahren kann so durchgeführt werden, dass die Zusatzdienste in einem Mobilfunknetz eingerichtet werden, das eine Struktur eines Intelligenten Netzes (IN) aufweist.

Zur weiteren Erläuterung des erfindungsgemäßen Verfahrens wird in
Figur 1 schematisch ein Ausführungsbeispiel eines Ablaufes des erfindungsgemäßen Verfahrens, in
Figur 2 eine tabellarische Übersicht zu Verfahrensschritten beim Einrichten von Empfänger-Diensten und in
Figur 3 eine tabellarische Übersicht zu Verfahrensschritten beim Einrichten von Absender-Diensten darstellt.

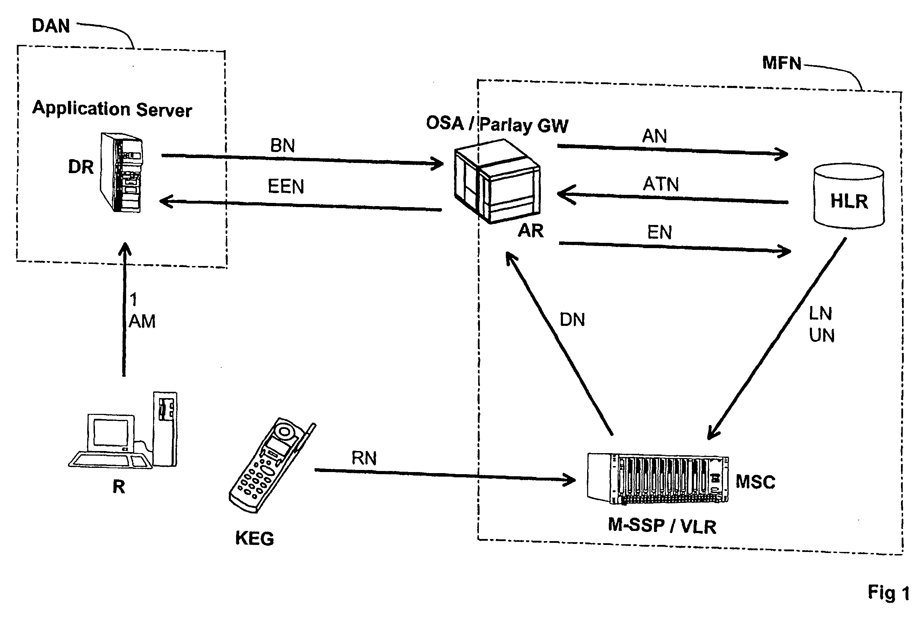

Im rechten Teil der Figur 1 sind ausgewählte Elemente eines Mobilfunknetzes MFN, bei dem es sich beispielsweise um ein Mobilfunknetz nach dem GSM-Standard handeln kann, dargestellt. Zu diesen ausgewählten Elementen gehören ein Administrationsrechner AR, ein Heimatregister HLR und eine Mobilvermittlungsstelle MSC (MSC = Mobile Switching Center). Bei der Mobilvermittlungsstelle MSC kann es sich z. B. um einen "Mobile Service Switching Point" mit "Visitor Location Register" (M-SSP/VLR) handeln. Der Administrationsrechner AR ist im dargestellten Ausführungsbeispiel als ein OSA/Parlay Gateway ausgebildet, über das eine Verbindung zu einem Dienstrechner DR hergestellt werden kann, wobei sich der Dienstrechner DR in einem Dienstanbieternetz DAN eines Dienstanbieters (Service Provider) befindet. Das Dienstanbieternetz DAN ist dabei außerhalb des Mobilfunknetzes MFN angesiedelt. Weiterhin ist ein Kommunikationsendgerät KEG dargestellt, mittels welchem Dienste über das Mobilfunknetz MFN genutzt werden können. Bei einem derartigen Kommunikationsendgerät KEG kann es sich beispielsweise um ein Mobiltelefon, einen Laptop oder einen Palmtop mit integrierter Funksende- und Empfangseinheit handeln. Ein Rechner R ermöglicht es einem Benutzer, sich für Dienste des Dienstanbieters anzumelden (diese Dienste zu subskribieren).

Im Heimatregister HLR sind unter den teilnehmerspezifischen Daten der Mobilfunkteilnehmer Dienstdaten gespeichert, die u. a. darüber Auskunft geben, welche Netzwerkdienste der jeweilige Teilnehmer in Anspruch nimmt. Diese Dienstdaten legen u. a. fest, unter welchen Umständen Dienste (z. B. Dienste eines intelligenten Netzes IN) mittels CAMEL-Protokollen für den Mobilfunkteilnehmer gestartet werden. Diese Daten werden als "CAMEL Subscription Information" (CSI) bezeichnet. Mittels dieser CSI-Daten werden Informationen abgelegt, die die Abwicklung der entsprechenden Dienste (z. B. der IN-Dienste) beschreiben. Beispielsweise ist in diesen CSI-Daten eine Information enthalten, die den jeweiligen IN-Dienst identifiziert, diese Information wird als "Service Key" bezeichnet. Des weiteren ist in den CSI-Daten eine Information über denjenigen Netzknoten des Intelligenten Netzes enthalten, der die Kontrolle über den durch diese CSI-Daten beschriebenen Dienst erhält. Diese Information wird als "Controlling SCF"-Parameter bezeichnet.

Die CSI-Daten existieren in verschiedenen Ausprägungen, beispielsweise als "Terminating CAMEL Subscription Information" (T-CSI), "VMSC Terminating CAMEL Subscription Information" (VT-CSI), "Originating CAMEL Subscription Information" (O-CSI) oder als "Dialled Services CAMEL Subscription Information" (D-CSI). Mit Hilfe der "T-CSI"-Daten wird ein Empfänger-Dienst (MT-Service = Mobile Terminating-Service) beschrieben, der dann gestartet wird, wenn an einer Gateway Mobilvermittlungsstelle (GMSC-SSP = Gateway Mobile Switching Center - Service Switching Point) des Mobilfunknetzes eine Rufaufbauforderung für einen Ruf zu einem Zielteilnehmer (für welchen der Empfängerdienst eingerichtet ist) eintrifft. Die "T-CSI" stellt also ein Kennzeichen für einen derartigen Empfänger-Dienst dar.
Mit Hilfe des Kennzeichens "VT-CSI" wird ein Empfänger-Dienst beschrieben, der dann gestartet wird, wenn an einer Besucher-Mobilvermittlungsstelle (VMSC-SSP = Visitor Mobile Switching Center - Service Switching Point) des Mobilfunknetzes eine Rufaufbauforderung für einen Ruf zu dem Zielteilnehmer eintrifft.
Das Kennzeichen "O-CSI wird einem Absender-Dienst (MO-Service = Mobile Originating Service) zugeordnet, welcher dann gestartet wird, wenn an einer Mobilvermittlungsstelle des Mobilfunknetzes eine Rufaufbauforderung für einen von dem Teilnehmer ausgehenden Ruf zu einer beliebigen Ziel-Rufnummer eintrifft.
Das Kennzeichen "D-CSI" schließlich wird einem Absender-Dienst zugeordnet, der dann gestartet wird, wenn an der Mobilvermittlungsstelle des Mobilfunknetzes Rufbauforderungen für von dem Teilnehmer ausgehende Rufe zu bestimmten vorgewählten Zielrufnummern eintreffen. Dabei ist für jeden Absender-Dienst eine eigene zugehörige Zielrufnummer vorgewählt und wird gemeinsam mit den anderen Dienstdaten im Heimatregister HLR gespeichert.
Derartige CSI-Ausprägungen sind in der Druckschrift "3GPP TS 23.078 V4.2.0 - 3^{rd} Generation Partnership Project; Technical Specification Group Core Network; Customized Applications for Mobile network Enhanced Logic (CAMEL) Phase 3 - Stage 2 (Release4)" vom September 2001 auf den Seiten 31 bis 34 beschrieben.

Die Ausprägung der CAMEL Subscription Information CSI entscheidet also darüber, ob der entsprechende Dienst als Empfänger-Dienst oder als Absender-Dienst gestartet wird. Darüber hinaus legt die Ausprägung der CSI-Daten auch fest, wann genau der Dienst gestartet werden soll, d. h. beispielsweise bei Eintreffen von bestimmten Ruf-Aufbauorderungs-Nachrichten in bestimmten Vermittlungsstellen.

Im folgenden sollen beispielhaft der Ablauf des Verfahrens beschrieben werden, wenn ein Dienstnutzer sich mit Hilfe des Rechners R für einen Absender-Dienst (MO-Dienst) anmeldet (diesen Dienst subskribiert). Bei diesem Absender-Dienst kann es sich in einem sehr einfachen Fall um einen Dienst handeln, der bei Absendung eines beliebigen Rufes dem Absender eine Begrüßungsnachricht ("Guten Morgen. Heute ist Montag, der 3. März; es ist 8 Uhr 13") vorspielt. Selbstverständlich kann man sich mit dem beschriebenen Verfahren auch für beliebige andere (z. B. kompliziertere) Dienste anmelden.

Der Rechner R des Dienstnutzers ist beispielsweise über eine Internet-Verbindung 1 mit dem Dienstrechner DR des Dienstanbieters verbunden. Über diese Internetverbindung 1 wird von dem Rechner R eine Anmeldenachricht AM zu dem Dienstrechner DR gesendet, wobei die Anmeldenachricht AM die Art des jeweiligen Dienstes und die Adresse ("user address") des Kommunikationsendgerätes, mit dem der Dienst genutzt werden soll (in diesem Fall die Mobilfunkrufnummer MSISDN des Kommunikationsendgerätes KEG) enthält. Diese Anmeldenachricht AM kann beispielsweise über das im Internet gebräuchliche Datenübertragungsprotokoll HTTP (HTTP = Hypertext Transfer Protocol) übertragen werden. Durch die Anmeldenachricht AM wird der entsprechende Mobilfunkteilnehmer bei dem Dienstrechner DR des Diensteanbieters angemeldet.

Der Dienstrechner DR sendet daraufhin die mit der Anmeldenachricht AM empfangenen Daten zumindest teilweise mittels einer Benachrichtigungsnachricht BN an den Administrationsrechner AR weiter. Diese Benachrichtigungsnachricht BN enthält u.a. die Nutzeradresse MSISDN. Bei diesem speziellen Ausführungsbeispiel handelt es sich bei der Benachrichtigungsnachricht BN um die OSA-Nachricht "EnableCallNotification".

Der Administrationsrechner AR sendet daraufhin eine Abfragenachricht AN an das Heimatregister HLR. Bei dieser Abfragenachricht AN kann es sich beispielsweise um die MAP-Nachricht "Anytime Subscription Interrogation" (ATSI) handeln. Mittels dieser Abfragenachricht AN wird die Nutzeradresse MSISDN zu dem Heimatregister HLR übertragen.

Auf diese Abfragenachricht AN hin ermittelt das Heimatregister HLR, für welche Dienste der Nutzer mit der Nutzeradresse MSISDN bereits angemeldet ist und sendet Informationen über diese Dienste zusammen mit den jeweiligen CSI-Daten (T-CSI, VT-CSI, O-CSI oder D-CSI) mittels einer Antwortnachricht ATN an den Administrationsrechner AR zurück. Bei der Antwortnachricht ATN kann es sich beispielsweise um die MAP-Nachricht "Anytime Subscription Interrogation acknowledge" (ATSI-Ack) handeln. Die Antwortnachricht ATN übermittelt also "Alt-Dienstdaten" bereits eingerichteter ("alter") Dienste an den Administrationsrechner AR. Dem Administrationsrechner AR ist jetzt bekannt, welche Dienste im Zusammenhang mit den CSI-Daten in dem Heimatregister HLR gespeichert sind, d. h. welche Dienste für den jeweiligen Nutzer eingerichtet sind. Anhand den bereits mit Diensten versehenen ("belegten") Ausführungen der CSI-Daten kann der Administrationsrechner AR entscheiden, ob die Einrichtung des gewünschten Absenderdienstes möglich ist (d. h. ob den einzurichtenden Dienst betreffende Dienstdaten ["Zusatz-Dienstdaten"] zusätzlich zu den Alt-Dienstdaten in dem Heimatregister HLR abgespeichert werden können), und festlegen, welche Ausprägung der CSI-Daten dem Dienst zugeordnet wird, d.h. welche CSI-Daten für den Dienst "aktiviert" werden. Dieser Teil des Verfahrens wird weiter unten genauer beschrieben.

Als Ergebnis dieses Teils des Verfahrens ist dem Administrationsrechner AR bekannt, wie der einzurichtende Dienst im Heimatregister eingerichtet werden soll, d. h. wie die Dienstdaten des einzurichtenden Dienstes mit konkreten CSI-Daten verbunden werden und welche Ausprägung der CSI-Daten für diesen konkreten Dienst verwendet wird. Nun sendet der Administrationsrechner AR eine Einschreibnachricht EN an das Heimatregister HLR. Bei dieser Einschreibnachricht EN kann es sich beispielsweise um die MAP-Nachricht "anyTimeModification" (ATM) handeln. Mittels dieser Nachricht wird u.a. die Nutzeradresse MSISDN, der neue "Controlling SCF"-Parameter (welcher die Adresse des Administrationsrechners AR enthält), die Art des Dienstes und die Ausprägung des CSI zu dem Heimatregister HLR übertragen. Die MAP-Nachricht "anyTimeModification" wird für die Verwendung als Einschreibnachricht EN um ein neues Datenfeld erweitert, welches den Parameter "NewControllingSCF" enthält. In dieses Datenfeld wird im konkreten Beispiel die Adresse des Administrationsrechners AR eingetragen.

Das Heimatregister HLR speichert daraufhin die empfangenen Daten des einzurichtenden Dienstes als Zusatzdienstdaten ab. Damit ist der (Zusatz-)Dienst im Heimatregister HLR eingerichtet. Diese Einrichtung wird dem Administrationsrechner AR mittels einer Nachricht "ATM Acknowledge" quittiert.

Das Heimatregister HLR sorgt nun dafür, dass die veränderten Dienstdaten auch in den Mobilvermittlungsstellen, welche ein Besucherregister VLR (VLR = Visitor Location Register) enthalten, zur Verfügung stehen. Dazu sendet das Heimatregister HLR eine Löschnachricht LN an die mobile Vermittlungsstelle MSC (welche ein Besucherregister VLR enthält) und bewirkt damit, dass die in diesem Besucherregister gespeicherten - nunmehr veralteten - Dienstdaten gelöscht werden. Als derartige Löschnachricht LN kann beispielsweise die MAP-Nachricht "CancelLocation" gesendet werden. Daran anschließend sendet das Heimatregister HLR eine Update-Nachricht UN an die Mobilvermittlungsstelle MSC, welche die neuen - nunmehr gültigen - Dienstdaten des Nutzers enthält. Diese Dienstdaten werden im Besucherregister der Mobilvermittlungsstelle MSC gespeichert, damit ist der Datenbestand des Besucherregisters der Mobilvermittlungsstelle MSC aktualisiert. Als derartige Update-Nachrichten UN kann beispielsweise die MAP-Nachricht "Insert Subscriber Data" gesendet werden, welche u.a. die Adresse MSISDN des Kommunikationsendgerätes KEG und als Parameter "newControlling SCF" die Adresse des Administrationsrechners AR enthält.

Wenn nun zu einem späteren Zeitpunkt ein Nutzer des Kommunikationsendgerätes KEG mittels dieses Kommunikationsendgerätes KEG einen Ruf aussendet, so wird eine Rufnachricht RN von dem Kommunikationsendgerät KEG an die Mobilvermittlungsstelle MSC gesendet. Die Mobilvermittlungsstelle MSC erkennt anhand der mit der Rufnachricht RN mitgesendeten Mobilfunkrufnummer MSISDN durch Vergleich mit den in der Mobilvermittlungsstelle gespeicherten Dienstdaten, dass für das Kommunikationsendgerät KEG (bzw. für dessen Nutzer) ein Absenderdienst eingerichtet ist. Daraufhin sendet die Mobilvermittlungsstelle MSC eine Dienstnachricht DN an den Administrationsrechner AR, denn aufgrund der in der Mobilvermittlungsstelle MSC bzw. in dem zugehörigen Besucherregister gespeicherten Parameter "New Controlling SCF" ist der Mobilvermittlungsstelle MSC die für den Dienst zuständige Kontrolleinrichtung (in diesem Fall der Administrationsrechner AR) bekannt. Als Dienstnachricht DN kann beispielsweise die CAP-Nachricht "Initial DP" gesendet werden, welche neben der Mobilfunkrufnummer MSISDN die Art des eingerichteten Dienstes enthält. Der Administrationsrechner AR sendet daraufhin eine Ereignisnachricht EEN an den Dienstrechner DR des Dienstanbieters. Bei dieser Ereignisnachricht EEN kann es sich z. B. um die OSA-Nachricht "CallEventNotify" handeln. Mit der Ereignisnachricht EEN wird u.a. die Mobilfunkrufnummer MSISDN des Teilnehmers und eine den zu erbringenden Dienst kennzeichnende Information übertragen. Daraufhin ist dem Dienstrechner DR bekannt, dass für den Teilnehmer mit der entsprechenden Mobilfunkrufnummer der entsprechende Dienst erbracht werden soll, und der Dienstrechner DR wird im folgenden unter Benutzung des Mobilfunknetzes MFN diesen Dienst erbringen. Dies ist in der Figur 1 nicht dargestellt.

Im folgenden werden die im Administrationsrechner AR zwischen dem Eintreffen der Antwortnachricht ATN und dem Absenden der Einschreibnachricht EN ablaufenden Vorgänge detailliert beschrieben. Mit der Antwortnachricht ATN enthält der Administrationsrechner AR die Information, welche Dienste für den jeweiligen Dienstnutzer subskribiert sind (d. h. für welche Dienste der Dienstnutzer angemeldet ist) und welche konkreten Ausprägungen an CSI-Daten (also z. B. T-CSI, VT-CSI, O-CSI oder D-CSI) an diese Dienste geknüpft sind. In dem beschriebenen Beispiel, dass ein Absender-Dienst eingerichtet werden soll, wertet der Administrationsrechner die Kennzeichen O-CSI und D-CSI aus, indem der Administrationsrechner AR überprüft, ob der O-CSI oder D-CSI Dienste zugeordnet sind. Dabei können folgende Möglichkeiten auftreten:
Fall 1) Geht aus den abgefragten Alt-Dienstdaten hervor, dass für den Teilnehmer bisher kein Absender-Dienst dritten Typs eingerichtet ist und dass daher keine dem Kennzeichen "O-CSI" zugeordneten Dienstdaten im Heimatregister HLR gespeichert sind, und dass für den Teilnehmer bisher kein Absender-Dienst vierten Typs eingerichtet ist und dass daher keine dem Kennzeichen "D-CSI" zugeordneten Dienstdaten im Heimatregister HLR gespeichert sind, dann wird der neu einzurichtende Absender-Dienst als Absender-Dienst dritten Typs eingerichtet, d. h. die Zusatz-Dienstdaten dieses Absender-Dienstes werden dem Kennzeichen "O-CSI" zugeordnet und im Heimatregister abgespeichert. Dieser Sachverhalt wird im technischen Sprachgebrauch so formuliert: "Ist weder die O-CSI noch die D-CSI belegt, dann aktiviert der Administrationsrechner AR den einzurichtenden neuen Absender-Dienst auf der O-CSI."
Fall 2) Ist die O-CSI bereits mit einem Alt-Absender-Dienst belegt, die D-CSI aber noch nicht mit einem Alt-Absender-Dienst belegt, so ist für die Einrichtung des neuen Absender-Dienstes entscheidend, ob der bereits eingerichtete Alt-Dienst oder der neu einzurichtende Zusatz-Dienst zeitlich betrachtet zuerst gestartet werden soll.
Fall 2a) Wenn der bereits vorhandene, eingerichtete Alt-Dienst zeitlich zuerst zu starten ist, dann wird die D-CSI für den neu einzurichtenden Zusatz-Dienst aktiviert. Als Parameter "Dialled Number" der D-CSI wird in diesem Falle ein Platzhalter (für eine beliebige Ziffer) oder die Null (für nationale/internationale Ausscheidungsziffern) gesetzt. (Hierzu ist ergänzend anzumerken, dass bei Einrichtung eines weiteren Dienstes, der über die D-CSI mit einer konkreten Telefonnummer verknüpft ist, dieser weitere Dienst vor dem mit Platzhalter oder Null eingerichteten Dienst gestartet wird).
Fall 2b) Soll der bereits vorhandene Alt-Dienst nach dem neu einzurichtenden Dienst gestartet werden, dann werden sowohl der Alt-Dienst als auch der neu einzurichtende Absender-Dienst durch jeweils eine Einschreibnachricht mit einer neuen Ausprägung der CSI verknüpft. Konkret wird die D-CSI für den Alt-Dienst aktiviert, die O-CSI für den neu einzurichtenden Dienst. Dabei wird die ursprüngliche Zuordnung des Alt-Dienstes zur O-CSI gelöscht.
Fall 3) Ist die 0-CSI mit einem Alt-Dienst belegt und ist die D-CSI mit weniger als der maximal mögliche Anzahl an Absender-Diensten belegt (die D-CSI kann beispielsweise mit maximal 10 Diensten belegt werden), dann wird die D-CSI auch für den neu einzurichtenden Dienst aktiviert. Der Dienst wird also als ein weiterer Dienst über die D-CSI eingerichtet.
Fall 4) Ist die O-CSI nicht belegt und ist die D-CSI belegt, und soll der neu einzurichtende Dienst vor den Alt-Diensten gestartet werden, so wird die O-CSI für den neu einzurichtenden Dienst aktiviert.
Fall 5) Sind sowohl die O-CSI als auch bereits die D-CSI mit der Maximalanzahl einrichtbarer Dienste belegt, dann kann der neu einzurichtende Dienst nicht eingerichtet werden, denn es besteht keine Speichermöglichkeit mehr für die Dienstdaten des neu einzurichtenden Dienstes. Der Administrationsrechner AR wird also die Einrichtung abbrechen und eine entsprechende Informations-Nachricht an den Dienstsrechner DR senden.

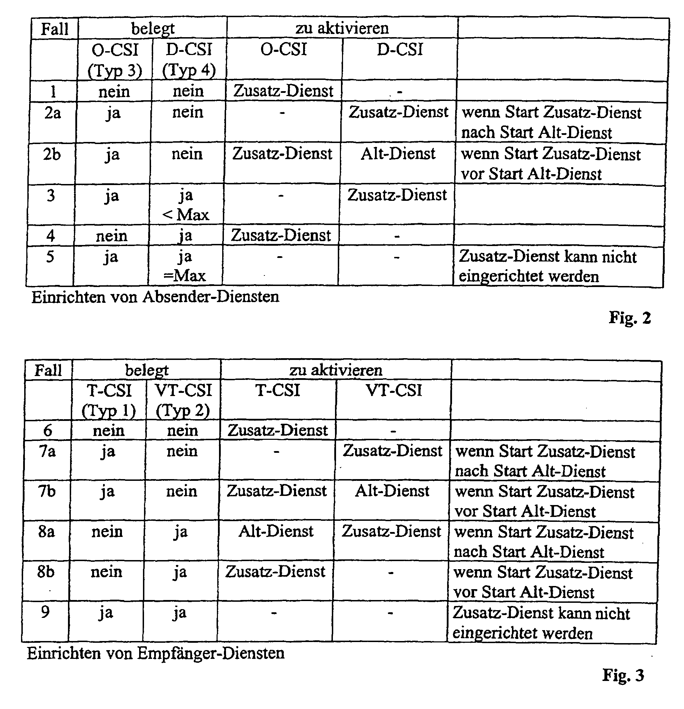

Diese Fallunterscheidungen sind nochmals zusammengefasst in der Tabelle in Figur 2 dargestellt.

Nachdem der Administrationsrechner AR unter Anwendung der vorgenannten Regeln 1) bis 5) bestimmt hat, welche CSI-Kennzeichen für den neu einzurichtenden Dienst und ggf. für Alt-Dienste zu aktivieren sind, sendet er entsprechende Einschreibnachrichten an das Heimatregister HLR, speichert damit die Dienstdaten in dem Heimatregister ab und veranlasst damit die Einrichtung des Zusatzdienstes.

Nachdem das Verfahren bei der Einrichtung von Absender-Diensten erläutert wurde, wird im folgenden das Verfahren für die Einrichtung von Empfänger-Diensten (Mobile Terminated Services) beschrieben:

Ist ein Empfänger-Dienst neu einzurichten, so wertet der Administrationsrechner AR den Inhalt der Antwortnachricht ATN dahingehend aus, dass er feststellt, ob für den entsprechenden Teilnehmer bereits die T-CSI oder die VT-CSI mit Diensten belegt ist. Dabei können folgende Fallunterscheidungen auftreten:
Fall 6) Ist weder die T-CSI noch die VT-CSI belegt, so aktiviert der Administrationsrechner AR die T-CSI für den neu einzurichtenden Dienst.
Fall 7) Ist die T-CSI belegt, die VT-CSI jedoch unbelegt, so muss die zeitliche Reihenfolge beachtet werden, in der der schon vorhandene Alt-Dienst bezüglich des neu einzurichtenden Dienstes gestartet werden soll:
Fall 7a) Ist der bereits vorhandene Alt-Dienst vor dem neu einzurichtenden Dienst zu starten, dann wird die VT-CSI für den neu einzurichtenden Dienst aktiviert.
Fall 7b) Ist jedoch der bereits eingerichtete Alt-Dienst nach dem neu einzurichtenden Dienst zu starten, dann wird durch eine erste Einschreibnachricht EN die VT-CSI für den bereits vorhandene Alt-Dienst aktiviert und mit einer zweiten Einschreibnachricht wird die T-CSI mit dem neu einzurichtenden Dienst aktiviert. Die ursprüngliche Verknüpfung des bereits eingerichteten Alt-Dienstes wird dadurch gelöscht.
Fall 8) Ist die VT-CSI belegt, die T-CSI jedoch unbelegt, so muss die zeitliche Reihenfolge beachtet werden, in der der schon vorhandene Alt-Dienst bezüglich des neu einzurichtenden Dienstes gestartet werden soll:
Fall 8a) Ist der bereits eingerichtete Alt-Dienst vor dem neu einzurichtenden Dienst zu starten, dann wird durch eine erste Einschreibnachricht EN die T-CSI für den bereits vorhandene Alt-Dienst aktiviert und mit einer zweiten Einschreibnachricht wird die VT-CSI mit dem neu einzurichtenden Dienst aktiviert. Die ursprüngliche Verknüpfung des bereits eingerichteten Alt-Dienstes wird dadurch gelöscht.
Fall 8b) Ist der bereits vorhandene Alt-Dienst nach dem neu einzurichtenden Dienst zu starten, dann wird die T-CSI für den neu einzurichtenden Dienst aktiviert.
Fall 9) Ist bereits die T-CSI und die VT-CSI durch je einen Alt-Dienst belegt, so kann der neu einzurichtende Dienst nicht eingerichtet werden. Der Administrationsrechner AR wird also den Einrichtvorgang abbrechen und eine entsprechende Nachricht an den Dienstrechner DR senden.

Diese Fallunterscheidungen sind nochmals zusammengefasst in der Tabelle in Figur 3 dargestellt.

Es ist ein besonderer Vorteil des dargestellten Verfahrens, dass durch die gleichzeitige Nutzung der T-CSI und der VT-CSI mehr als ein Empfänger-Dienst für die Nutzung durch einen Teilnehmer eingerichtet werden kann. Durch die gleichzeitige Nutzung der O-CSI und der D-CSI kann ebenso mehr als ein Absender-Dienst pro Teilnehmer eingerichtet werden.

## Patentansprüche

1. Verfahren zum Einrichten eines Zusatz-Dienstes in einem Mobilfunknetz (MFN), bei dem
- von einem Administrationsrechner (AR) mittels einer Abfragenachricht (AN) aus einem Heimatregister (HLR) des Mobilfunknetzes (MFN) Alt-Dienstdaten bereits eingerichteter Alt-Dienste abgefragt (AN) werden,
- anhand der abgefragten Alt-Dienstdaten ermittelt wird, ob den Zusatz-Dienst betreffende Zusatz-Dienstdaten zusätzlich zu den Alt-Dienstdaten in dem Heimatregister (HLR) speicherbar sind,
- bei bestehender Speichermöglichkeit von dem Administrationsrechner (AR) mittels einer Einschreibnachricht (EN) das Speichern der Zusatz-Dienstdaten in dem Heimatregister (HLR) veranlasst und damit der Zusatz-Dienst eingerichtet wird, oder
- bei nicht bestehender Speichermöglichkeit das Einrichten des Zusatz-Dienstes abgebrochen wird.

2. Verfahren nach Anspruch 1,
**dadurch gekennzeichnet, dass**
zum Einrichten eines Empfänger-Dienstes, der bei Eintreffen eines Ziel-Rufes bei einem Zielteilnehmer gestartet wird, anhand der abgefragten Alt-Dienstdaten festgestellt wird,
- ob ein Alt-Empfänger-Dienst ersten Typs eingerichtet ist, der mittels eines Triggerpunktes einer Gateway-Mobilvermittlungsstelle des Mobilfunknetzes (MFN) gestartet wird, wenn an dieser Gateway-Mobilvermittlungsstelle eine Rufaufbauforderung für einen Ruf zu dem Zielteilnehmer eintrifft,
- ob ein Alt-Empfänger-Dienst zweiten Typs eingerichtet ist, der mittels eines Triggerpunktes einer Besucher-Mobilvermittlungsstelle des Mobilfunknetzes (MF) gestartet wird, wenn an dieser Besucher-Mobilvermittlungsstelle eine Rufaufbauforderung für einen Ruf zu dem Zielteilnehmer eintrifft, und
- dass nur dann erkannt wird, dass die Dienstdaten des Empfänger-Dienstes in dem Heimatregister (HLR) speicherbar sind, wenn nicht gleichzeitig der Alt-Empfänger-Dienst ersten Typs und der Alt-Empfänger-Dienst zweiten Typs eingerichtet ist.

3. Verfahren nach Anspruch 2,
**dadurch gekennzeichnet, dass**
- wenn weder der Alt-Empfänger-Dienst ersten Typs noch der Alt-Empfänger-Dienst zweiten Typs eingerichtet ist, der Empfänger-Dienst als ein neuer Empfänger-Dienst ersten Typs eingerichtet wird.

4. Verfahren nach Anspruch 3,
**dadurch gekennzeichnet, dass**
- den Dienstdaten des neuen Empfänger-Dienstes ersten Typs ein "Terminating CAMEL Subscription Information" (T-CSI) genanntes Kennzeichen zugeordnet wird.

5. Verfahren nach Anspruch 2,
**dadurch gekennzeichnet, dass**
- wenn lediglich der Alt-Empfänger-Dienst ersten Typs eingerichtet ist, und der Empfänger-Dienst zeitlich nach dem Alt-Empfänger-Dienst ersten Typs gestartet werden soll, der Empfänger-Dienst als ein neuer Empfänger-Dienst zweiten Typs eingerichtet wird.

6. Verfahren nach Anspruch 5,
**dadurch gekennzeichnet, dass**
- den Dienstdaten des neuen Empfänger-Dienstes zweiten Typs ein "VMSC Terminating CAMEL Subscription Information" (VT-CSI) genanntes Kennzeichen zugeordnet wird.

7. Verfahren nach Anspruch 2,
**dadurch gekennzeichnet, dass**
- wenn lediglich der Alt-Empfänger-Dienst ersten Typs eingerichtet ist, und der Empfänger-Dienst zeitlich vor dem Alt-Empfänger-Dienst ersten Typs gestartet werden soll, der Alt-Empfänger-Dienst ersten Typs gelöscht und als ein neuer Alt-Empfänger-Dienst zweiten Typs eingerichtet wird, und
- der Empfänger-Dienst als ein neuer Empfänger-Dienst ersten Typs eingerichtet wird.

8. Verfahren nach Anspruch 7,
**dadurch gekennzeichnet, dass**
- den Dienstdaten des neuen Alt-Empfänger-Dienstes zweiten Typs ein "VMSC Terminating CAMEL Subscription Information" (VT-CSI) genanntes Kennzeichen zugeordnet wird, und
- den Dienstdaten des neuen Empfänger-Dienstes ersten Typs ein "Terminating CAMEL Subscription Information" (T-CSI) genanntes Kennzeichen zugeordnet wird.

9. Verfahren nach Anspruch 2,
**dadurch gekennzeichnet, dass**
- wenn lediglich der Alt-Empfänger-Dienst zweiten Typs eingerichtet ist, und der Empfänger-Dienst zeitlich nach dem Alt-Empfänger-Dienst zweiten Typs gestartet werden soll, der Alt-Empfänger-Dienst zweiten Typs gelöscht und als ein neuer Alt-Empfänger-Dienst ersten Typs eingerichtet wird, und
- der Empfänger-Dienst als ein neuer Empfänger-Dienst zweiten Typs eingerichtet wird.

10. Verfahren nach Anspruch 9,
**dadurch gekennzeichnet, dass**
- den Dienstdaten des neuen Alt-Empfänger-Dienstes ersten Typs ein "Terminating CAMEL Subscription Information" (T-CSI) genanntes Kennzeichen zugeordnet wird, und
- den Dienstdaten des neuen Empfänger-Dienstes zweiten Typs ein "VMSC Terminating CAMEL Subscription Information" (VT-CSI) genanntes Kennzeichen zugeordnet wird.

11. Verfahren nach Anspruch 2,
**dadurch gekennzeichnet, dass**
- wenn lediglich der Alt-Empfänger-Dienst zweiten Typs eingerichtet ist, und der Empfänger-Dienst zeitlich vor dem Alt-Empfänger-Dienst zweiten Typs gestartet werden soll, der Empfänger-Dienst als ein neuer Empfänger-Dienst ersten Typs eingerichtet wird.

12. Verfahren nach Anspruch 11,
**dadurch gekennzeichnet, dass**
- den Dienstdaten des neuen Empfänger-Dienstes ersten Typs ein "Terminating CAMEL Subscription Information" (T-CSI) genanntes Kennzeichen zugeordnet wird.

13. Verfahren nach Anspruch 1,
**dadurch gekennzeichnet, dass**
zum Einrichten eines Absender-Dienstes, der bei Absenden eines Rufes von einem Teilnehmer gestartet wird, anhand der abgefragten Alt-Dienstdaten festgestellt wird,
- ob ein Alt-Absender-Dienst dritten Typs eingerichtet ist, der mittels eines Triggerpunktes einer Mobilvermittlungsstelle des Mobilfunknetzes (MFN) gestartet wird, wenn an dieser Mobilvermittlungsstelle eine Rufaufbauforderung für einen beliebigen, von dem Teilnehmer ausgehenden, Ruf eintrifft,
- ob bereits eine maximal mögliche Anzahl Alt-Absender-Dienste vierten Typs eingerichtet sind, welche mittels Triggerpunkte einer Mobilvermittlungsstelle des Mobilfunknetzes (MFN) gestartet werden, wenn an dieser Mobilvermittlungsstelle Rufaufbauforderungen für von dem Teilnehmer ausgehende Rufe zu vorgewählten Zielrufnummern eintreffen, und
- dass nur dann erkannt wird, dass die Dienstdaten des Empfänger-Dienstes in dem Heimatregister speicherbar sind, wenn nicht gleichzeitig der Alt-Absender-Dienst dritten Typs und die maximal mögliche Anzahl Alt-Absender-Dienste vierten Typs eingerichtet sind.

14. Verfahren nach Anspruch 13,
**dadurch gekennzeichnet, dass**
- wenn weder der Alt-Absender-Dienst dritten Typs noch die maximal mögliche Anzahl Alt-Absender-Dienste vierten Typs eingerichtet sind, der Absender-Dienst als ein neuer Absender-Dienst dritten Typs eingerichtet wird.

15. Verfahren nach Anspruch 14,
**dadurch gekennzeichnet, dass**
- den Dienstdaten des neuen Absender-Dienstes dritten Typs ein "Originating CAMEL Subscription Information" (O-CSI) genanntes Kennzeichen zugeordnet wird.

16. Verfahren nach Anspruch 13,
**dadurch gekennzeichnet, dass**
- wenn lediglich der Alt-Absender-Dienst dritten Typs eingerichtet ist, und der Absender-Dienst zeitlich nach dem Alt-Absender-Dienst dritten Typs gestartet werden soll, der Absender-Dienst als ein neuer Absender-Dienst vierten Typs eingerichtet wird.

17. Verfahren nach Anspruch 16,
**dadurch gekennzeichnet, dass**
- den Dienstdaten des neuen Absender-Dienstes vierten Typs ein "Dialled Service CAMEL Subscription Information" (D-CSI) genanntes Kennzeichen zugeordnet wird.

18. Verfahren nach Anspruch 13,
**dadurch gekennzeichnet, dass**
- wenn lediglich der Alt-Absender-Dienst dritten Typs eingerichtet ist, und der Absender-Dienst zeitlich vor dem Alt-Absender-Dienst dritten Typs gestartet werden soll, der Alt-Absender-Dienst dritten Typs gelöscht und als ein neuer Absender-Dienst vierten Typs eingerichtet wird, und
- der Absender-Dienst als ein neuer Absender-Dienst dritten Typs eingerichtet wird.

19. Verfahren nach Anspruch 18,
**dadurch gekennzeichnet, dass**
- den Dienstdaten des neuen Absender-Dienstes vierten Typs ein "Dialled Service CAMEL Subscription Information" (D-CSI) genanntes Kennzeichen zugeordnet wird, und
- den Dienstdaten des neuen Absender-Dienstes dritten Typs ein "Originating CAMEL Subscription Information" (O-CSI) genanntes Kennzeichen zugeordnet wird.

20. Verfahren nach Anspruch 13,
**dadurch gekennzeichnet, dass**
- wenn eine geringere Anzahl als die maximal mögliche Anzahl Alt-Absender-Dienste vierten Typs eingerichtet sind, und der Absender-Dienst zeitlich nach den eingerichteten Alt-Absender-Diensten vierten Typs gestartet werden soll, der Absender-Dienst als ein weiterer Absender-Dienst vierten Typs eingerichtet wird, wobei für diesen weiteren Absender-Dienst vierten Typs als vorgewählte Zielrufnummer ein Platzhalter (Joker) vorgewählt wird.

21. Verfahren nach Anspruch 20,
**dadurch gekennzeichnet, dass**
- den Dienstdaten des weiteren Absender-Dienstes vierten Typs ein "Dialled Service CAMEL Subscription Information" (D-CSI) genanntes Kennzeichen zugeordnet wird.

22. Verfahren nach Anspruch 13,
**dadurch gekennzeichnet, dass**
- wenn lediglich Alt-Absender-Dienste vierten Typs eingerichtet sind, und der Absender-Dienst zeitlich vor den Alt-Absender-Diensten vierten Typs gestartet werden soll, der Absender-Dienst als ein neuer Absender-Dienst dritten Typs eingerichtet wird.

23. Verfahren nach Anspruch 22,
**dadurch gekennzeichnet, dass**
- den Dienstdaten des neuen Absender-Dienstes dritten Typs ein "Originating CAMEL Subscription Information" (O-CSI) genanntes Kennzeichen zugeordnet wird.

24. Verfahren nach einem der Ansprüche 1 bis 23,
**dadurch gekennzeichnet, dass**
die Zusatzdienste in einem Mobilfunknetz eingerichtet werden, das eine Struktur eines Intelligenten Netzes (IN) aufweist.

## Claims

1. Method for setting up an additional service in a mobile radio network (MFN), in which
- old service data for old services which have already been set up are checked (AN) by an administration computer (AR) by means of an interrogation message (AN) from a home location register (HLR) for the mobile radio network (MFN),
- the checked old service data is used to determine whether additional service data which relates to the additional service can be stored in addition to the old service data in the home location register (HLR),
- if storage is possible, the administration computer (AR) uses a write message (EN) to cause the additional service data to be stored in the home location register (HLR), thus setting up the additional service, or
- if storage is not possible, the setting up of the additional service is terminated.

2. Method according to Claim 1,
**characterized in that**,
in order to set up a receiver service which is started on arrival of a destination call at a destination subscriber, the checked old service data is used to determine
- whether an old receiver service of a first type has been set up, which is started by means of a trigger point of a gateway mobile switching centre for the mobile radio network (MFN) when a call setting-up request for a call to the destination subscriber arrives at this gateway mobile switching centre,
- whether an old receiver service of a second type has been set up, which is started by means of a trigger point of a visitor mobile switching centre for the mobile radio network (MF) when a call setting-up request for a call to the destination subscriber arrives at this visitor mobile switching centre, and
- **in that** the possibility of storing the service data for the receiver service in the home location register (HLR) is identified only when the old receiver service of the first type and the old receiver service of the second type are not set up at the same time.

3. Method according to Claim 2,
**characterized in that**
- if neither the old receiver service of the first type nor the old receiver service of the second type has been set up, the receiver service is set up as a new receiver service of the first type.

4. Method according to Claim 3,
**characterized in that**
- the service data for the new receiver service of the first type is allocated an identification which is referred to as "Terminating CAMEL Subscription Information" (T-CSI).

5. Method according to Claim 2,
**characterized in that**
- if only the old receiver service of the first type has been set up, and the receiver service is intended to be started at a time after the old receiver service of the first type, the receiver service is set up as a new receiver service of the second type.

6. Method according to Claim 5,
**characterized in that**
- the service data for the new receiver service of the second type is allocated an identification which is referred to as "VMSC Terminating CAMEL Subscription Information" (VT-CSI).

7. Method according to Claim 2,
**characterized in that**
- if only the old receiver service of the first type has been set up, and the receiver service is intended to be started at a time before the old receiver service of the first type, the old receiver service of the first type is deleted and is set up as a new old receiver service of the second type, and
- the receiver service is set up as a new receiver service of the first type.

8. Method according to Claim 7,
**characterized in that**
- the service data for the new old receiver service of the second type is allocated an identification which is referred to as "VMSC Terminating CAMEL Subscription Information" (VT-CSI), and
- the service data for the new receiver service of the first type is allocated an identification which is referred to as "Terminating CAMEL Subscription Information" (T-CSI).

9. Method according to Claim 2,
**characterized in that**
- if only the old receiver service of the second type has been set up, and the receiver service is intended to be started at a time after the old receiver service of the second type, the old receiver service of the second type is deleted and is set up as a new old receiver service of the first type, and
- the receiver service is set up as a new receiver service of the second type.

10. Method according to Claim 9,
**characterized in that**
- the service data for the new old receiver service of the first type is allocated an identification which is referred to as "Terminating CAMEL Subscription Information" (T-CSI), and
- the service data for the new receiver service of the second type is allocated an identification which is referred to as "VMSC Terminating CAMEL Subscription Information" (VT-CSI).

11. Method according to Claim 2,
**characterized in that**
- if only the old receiver service of the second type has been set up, and the receiver service is intended to be started at a time before the old receiver service of the second type, the receiver service is set up as a new receiver service of the first type.

12. Method according to Claim 11,
**characterized in that**
- the service data for the new receiver service of the first type is allocated an identification which is referred to as "Terminating CAMEL Subscription Information" (T-CSI).

13. Method according to Claim 1,
**characterized in that**,
in order to set up a sender service which is started when a call is sent by a subscriber, the checked old service data is used to determine
- whether an old sender service of a third type has been set up, which is started by means of a trigger point of a mobile switching centre for the mobile radio network (MFN) when a call setting-up request for any call originating from the subscriber arrives at this mobile switching centre,
- whether a maximum possible number of old sender services of a fourth type have already been set up, which are started by means of trigger points of a mobile switching centre for the mobile radio network (MFN) when call setting-up requests for calls originating from the subscriber to preselected destination call numbers arrive at this mobile switching centre, and
- **in that** the possibility of storing the service data for the receiver service in the home location register is identified only when the old sender service of the third type and the maximum possible number of old sender services of the fourth type have not been set up at the same time.

14. Method according to Claim 13,
**characterized in that**
- if neither the old sender service of the third type nor the maximum possible number of old sender services of the fourth type have been set up, the sender service is set up as a new sender service of the third type.

15. Method according to Claim 14,
**characterized in that**
- the service data for the new sender service of the third type is allocated an identification which is referred to as "Originating CAMEL Subscription Information" (O-CSI).

16. Method according to Claim 13,
**characterized in that**
- if only the old sender service of the third type has been set up, and the sender service is intended to be started at a time after the old sender service of the third type, the sender service is set up as a new sender service of the fourth type.

17. Method according to Claim 16,
**characterized in that**
- the service data for the new sender service of the fourth type is allocated an identification which is referred to as "Dialled Service CAMEL Subscription Information" (D-CSI).

18. Method according to Claim 13,
**characterized in that**
- if only the old sender service of the third type has been set up, and the sender service is intended to be started at a time before the old sender service of the third type, the old sender service of the third type is deleted and is set up as a new sender service of the fourth type, and
- the sender service is set up as a new sender service of the third type.

19. Method according to Claim 18,
**characterized in that**
- the service data for the new sender service of the fourth type is allocated an identification which is referred to as "Dialled Service CAMEL Subscription Information" (D-CSI), and
- the service data for the new sender service of the third type is allocated an identification which is referred to as "Originating CAMEL Subscription Information" (O-CSI).

20. Method according to Claim 13,
**characterized in that**
- when a smaller number than the maximum possible number of old sender services of the fourth type have been set up, and the sender service is intended to be started at a time after the old sender services of the fourth type which have been set up, the sender service is set up as a further sender service of the fourth type, with a joker being preselected as the preselected destination call number for this further sender service of the fourth type.

21. Method according to Claim 20,
**characterized in that**
- the service data for the further sender service of the fourth type is allocated an identification which is referred to as "Dialled Service CAMEL Subscription Information" (D-CSI).

22. Method according to Claim 13,
**characterized in that**
- if only old sender services of the fourth type have been set up, and the sender service is intended to be started at a time before the old sender services of the fourth type, the sender service is set up as a new sender service of the third type.

23. Method according to Claim 22,
**characterized in that**
- the service data for the new sender service of the third type is allocated an identification which is referred to as "Originating CAMEL Subscription Information" (O-CSI).

24. Method according to one of Claims 1 to 23,
**characterized in that**
the additional services are set up in a mobile radio network which has a structure of an intelligent network (IN).

## Revendications

1. Procédé d'installation d'un service supplémentaire dans un réseau de radiocommunication mobile (MFN), dans lequel
- on interroge (AN) par l'intermédiaire d'un ordinateur administrateur (AR) au moyen d'un message d'interrogation (AN) dans un enregistreur de localisation nominal (HLR) du réseau de radiocommunication mobile (MFN) des données d'anciens services déjà installés,
- on détermine à l'aide des données d'anciens services interrogées si des données de service supplémentaire concernant le service supplémentaire peuvent être mémorisées en plus des données d'anciens services dans l'enregistreur de localisation nominal (HLR),
- s'il existe une possibilité de mémorisation, on provoque par l'intermédiaire de l'ordinateur administrateur (AR) au moyen d'un message d'enregistrement (EN) la mémorisation des données de service supplémentaire dans l'enregistreur de localisation nominal (HLR) et on installe ainsi le service supplémentaire, ou
- s'il n'existe pas de possibilité de mémorisation, on interrompt l'installation du service supplémentaire.

2. Procédé selon la revendication 1,
**caractérisé par le fait que**, pour installer un service de récepteur qui est déclenché lors de l'arrivée d'un appel de destination à un abonné destinataire, on détermine à l'aide des données d'anciens services interrogées
- si un ancien service de récepteur du premier type est installé, lequel est déclenché au moyen d'un point de déclenchement d'un centre de commutation de service mobile passerelle du réseau de radiocommunication mobile (MFN) lorsqu'une demande d'établissement d'appel arrive à ce centre de commutation de service mobile passerelle pour un appel vers l'abonné destinataire,
- si un ancien service de récepteur du deuxième type est installé, lequel est déclenché au moyen d'un point de déclenchement d'un centre de commutation de service mobile visiteur du réseau de radiocommunication mobile (MF) lorsqu'une demande d'établissement d'appel arrive à ce centre de commutation de service mobile visiteur pour un appel vers l'abonné destinataire, et
qu'on reconnaît que les données du service de récepteur peuvent être mémorisées dans l'enregistreur de localisation nominal (HLR) seulement si ne sont pas déjà installés simultanément l'ancien service de récepteur du premier type et l'ancien service de récepteur du deuxième type.

3. Procédé selon la revendication 2,
**caractérisé par le fait que**, si ni l'ancien service de récepteur du premier type ni l'ancien service de récepteur du deuxième type n'est installé, on installe le service de récepteur comme un nouveau service de récepteur du premier type.

4. Procédé selon la revendication 3,
**caractérisé par le fait qu'**on associe aux données de service du nouveau service de récepteur du premier type un indicateur appelé "Terminating CAMEL Subscription Information" (T-CSI).

5. Procédé selon la revendication 2,
**caractérisé par le fait que**, si seul l'ancien service de récepteur du premier type est installé et si le service de récepteur doit être déclenché temporellement après l'ancien service de récepteur du premier type, on installe le service de récepteur comme un nouveau service de récepteur du deuxième type.

6. Procédé selon la revendication 5,
**caractérisé par le fait qu'**on associe aux données de service du nouveau service de récepteur du deuxième type un indicateur appelé "VMSC Terminating CAMEL Subscription Information" (VT-CSI).

7. Procédé selon la revendication 2,
**caractérisé par le fait que**
- si seul l'ancien service de récepteur du premier type est installé et si le service de récepteur doit être déclenché temporellement avant l'ancien service de récepteur du premier type, on efface l'ancien service de récepteur du premier type et on l'installe comme un nouvel ancien service de récepteur du deuxième type, et
- on installe le service de récepteur comme un nouveau service de récepteur du premier type.

8. Procédé selon la revendication 7,
**caractérisé par le fait que**
- on associe aux données de service du nouvel ancien service de récepteur du deuxième type un indicateur appelé "VMSC Terminating CAMEL Subscription Information" (VT-CSI), et
- on associe aux données de service du nouveau service de récepteur du premier type un indicateur appelé "Terminating CAMEL Subscription Information" (T-CSI).

9. Procédé selon la revendication 2,
**caractérisé par le fait que**
- si seul l'ancien service de récepteur du deuxième type est installé et si le service de récepteur doit être déclenché temporellement après l'ancien service de récepteur du deuxième type, on efface l'ancien service de récepteur du deuxième type et on l'installe comme un nouvel ancien service de récepteur du premier type, et
- on installe le service de récepteur comme un nouveau service de récepteur du deuxième type.

10. Procédé selon la revendication 9,
**caractérisé par le fait que**
- on associe aux données de service du nouvel ancien service de récepteur du premier type un indicateur appelé "Terminating CAMEL Subscription Information" (T-CSI), et
- on associe aux données de service du nouveau service de récepteur du deuxième type un indicateur appelé "VMSC Terminating CAMEL Subscription Information" (VT-CSI).

11. Procédé selon la revendication 2,
**caractérisé par le fait que**, si seul l'ancien service de récepteur du deuxième type est installé et si le service de récepteur doit être déclenché temporellement avant l'ancien service de récepteur du deuxième type, on installe le service de récepteur comme un nouveau service de récepteur du premier type.

12. Procédé selon la revendication 11,
**caractérisé par le fait qu'**on associe aux données de service du nouveau service de récepteur du premier type un indicateur appelé "Terminating CAMEL Subscription Information" (T-CSI).

13. Procédé selon la revendication 1,
**caractérisé par le fait que**, pour installer un service d'émetteur qui est déclenché lors de l'émission d'un appel par un abonné, on détermine à l'aide des données d'anciens services interrogées
- si un ancien service d'émetteur du troisième type est installé, lequel est déclenché au moyen d'un point de déclenchement d'un centre de commutation de service mobile du réseau de radiocommunication mobile (MFN) lorsqu'une demande d'établissement d'appel arrive à ce centre de commutation de service mobile pour un appel quelconque partant de l'abonné,
- si un nombre maximal possible d'anciens services d'émetteurs du quatrième type sont déjà installés, lesquels sont déclenchés au moyen de points de déclenchement d'un centre de commutation de service mobile du réseau de radiocommunication mobile (MFN) lorsque des demandes d'établissement d'appel arrivent à ce centre de commutation de service mobile pour des appels partant de l'abonné vers des numéros d'appel de destination présélectionnés, et
qu'on reconnaît que les données du service d'émetteur peuvent être mémorisées dans l'enregistreur de localisation nominal seulement si ne sont pas déjà installés simultanément l'ancien service d'émetteur du troisième type et le nombre maximal possible d'anciens services émetteurs du quatrième type.

14. Procédé selon la revendication 13,
**caractérisé par le fait que**, si ni l'ancien service d'émetteur du troisième type ni le nombre maximal possible d'anciens services émetteurs du quatrième type n'est installé, on installe le service d'émetteur comme un nouveau service d'émetteur du troisième type.

15. Procédé selon la revendication 14,
**caractérisé par le fait qu'**on associe aux données de service du nouveau service d'émetteur du troisième type un indicateur appelé "Originating CAMEL Subscription Information" (O-CSI).

16. Procédé selon la revendication 13,
**caractérisé par le fait que**, si seul l'ancien service d'émetteur du troisième type est installé et si le service d'émetteur doit être déclenché temporellement après l'ancien service d'émetteur du troisième type, on installe le service d'émetteur comme un nouveau service d'émetteur du quatrième type.

17. Procédé selon la revendication 16,
**caractérisé par le fait qu'**on associe aux données de service du nouveau service d'émetteur du quatrième type un indicateur appelé "Dialled Service CAMEL Subscription Information" (D-CSI).

18. Procédé selon la revendication 13,
**caractérisé par le fait que**
- si seul l'ancien service d'émetteur du troisième type est installé et si le service d'émetteur doit être déclenché temporellement avant l'ancien service d'émetteur du troisième type, on efface l'ancien service d'émetteur du troisième type et on l'installe comme un nouveau service d'émetteur du quatrième type, et
- on installe le service d'émetteur comme un nouveau service d'émetteur du troisième type.

19. Procédé selon la revendication 18,
**caractérisé par le fait que**
- on associe aux données de service du nouveau service d'émetteur du quatrième type un indicateur appelé "Dialled Service CAMEL Subscription Information" (D-CSI), et
- on associe aux données de service du nouveau service d'émetteur du troisième type un indicateur appelé "Originating CAMEL Subscription Information" (O-CSI).

20. Procédé selon la revendication 13,
**caractérisé par le fait que**, si un nombre inférieur au nombre maximal possible d'anciens services émetteurs du quatrième type sont installés et si le service d'émetteur doit être déclenché temporellement après les anciens services émetteurs du quatrième type installés, on installe le service d'émetteur comme un autre service d'émetteur du quatrième type, un emplacement réservé (joker) étant présélectionné comme numéro d'appel de destination présélectionné pour cet autre service d'émetteur du quatrième type.

21. Procédé selon la revendication 20,
**caractérisé par le fait qu'**on associe aux données de service de l'autre service d'émetteur du quatrième type un indicateur appelé "Dialled Service CAMEL Subscription Information" (D-CSI).

22. Procédé selon la revendication 13,
**caractérisé par le fait que**, si seuls d'anciens services émetteurs du quatrième type sont installés et si le service d'émetteur doit être déclenché temporellement avant les anciens services émetteurs du quatrième type, on installe le service d'émetteur comme un nouveau service d'émetteur du troisième type.

23. Procédé selon la revendication 22,
**caractérisé par le fait qu'**on associe aux données de service du nouveau service d'émetteur du troisième type un indicateur appelé "Originating CAMEL Subscription Information" (O-CSI).

24. Procédé selon l'une des revendications 1 à 23,
**caractérisé par le fait qu'**on installe les services supplémentaires dans un réseau de radiocommunication mobile qui a la structure d'un réseau intelligent (IN).
